# EUROPEAN PATENT SPECIFICATION

(11) **EP 3 100 821 B1**
(45) Date of publication and mention of the grant of the patent: **19.12.2018**
(21) Application number: 16169463.3
(22) Date of filing: 12.05.2016
(51) Int. Cl.: B23Q 11/00, F04D 29/22, F04D 29/32

(54) **PERFECTED CLEANING TURBINE**
PERFEKTIONIERTE REINIGUNGSTURBINE
TURBINE DE NETTOYAGE AMELIOREE

(30) Priority: 12.05.2015 IT UD20150066
(43) Date of publication of application: 07.12.2016
(73) Proprietor: Metal World SpA, 33050 Pavia di Udine (UD) (IT)
(72) Inventor: Paviotti, Franco, 33050 Trivignano Udinese (UD) (IT)
(74) Representative: Petraz, Gilberto Luigi

(56) References cited:
- EP-A1- 2 422 925
- EP-A1- 2 644 318
- EP-A2- 0 496 392
- WO-A1-01/58632
- FR-A1- 2 909 018
- JP-A- 2006 015 444
- JP-A- 2013 091 116

## Description

### FIELD OF THE INVENTION

The present invention concerns a cleaning turbine, more particularly a turbine element or turbine that is applied to a tool-bearing device, or a tool such as a slot mill, drill bit, molding bit, etc.

Such tools serve to remove material from a support, normally but not exclusively a flat support, such as wood, aluminum, plastic or also iron.

They are used to make holes, hollows, contours, designs and suchlike.

### BACKGROUND OF THE INVENTION

Cleaning turbines are known, the purpose of which is to clean the work plane and distance the chip from the work zone, so that at least the zone being worked and the tool itself are visible and so that the chip does not clog up the work carried out or interfere with the tool.

The turbines are replaceable and, when working, cooperate with the tool-bearing device or with the tool. They can provide, or not, cavities or bells located either in the lower part or the upper part of the turbines.

Examples of known cleaning turbines are described in documents EP-A-2.644.318, JP-A-2013.091116 and US-A-5.772.367.

The cleaning turbine described in EP-A-2.644.318 is defined by a body conformed as a bell in which a plurality of through slits are made. The through slits have a median axis disposed inclined diverging upward with respect to the axis of rotation of the turbine. In this solution the through slits have a cross section size that decreases from the inside to the outside of the turbine. This causes low efficiency in sucking up some types of work residues, and problems of clogging of the slits by certain work residues.

Document JP-A-2013.091116 describes a cleaning turbine with a bell conformation with a cavity disposed during use toward the work zone. The cleaning turbine is provided with a plurality of through slits which from the lower surface of the turbine extend through toward the upper surface. The through slits have a uniform cross section size from the lower surface to the upper surface of the cleaning turbine. The particular conformation of the cross section of the through slits, coordinated with the limited thickness of the bell, does not make it possible to generate, in the turbine, suction flows sufficient to suck up all the types of work residues.

US-A-5.772.367 describes a turbine to be associated with a tool that is provided with a plurality of fins, angularly distanced from each other, to form a radial turbine. The fins define passage apertures for the work residues which are open toward the work zone, and open laterally in a circumferential direction but are not able to create a sufficient depression.

One disadvantage of known cleaning turbines is that, although moving the chip, they are not able either to clean the work plane thoroughly, or to throw the chip en masse far enough.

Especially when the action of the tool is assisted by an operator using a template with guide pegs, for example working on work centers, the work plane on which the tool is working and on which the template is operating must be completely and extensively cleaned.

The purpose of the invention is therefore to improve turbines used in association with tools, normally bits for holing, mills, contouring tools, etc.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purposes, a perfected cleaning turbine is provided.

According to the invention, the cleaning turbine comprises a bell created in the turbine itself, and the turbine is applied to the tool or the tool-bearing device, and has circumferential slits.

The slits can be, in relation to a horizontal plane of the turbine, either closed or open.

By open slits we mean that they are defined by lateral elements connected to each other only in an upper or lower part of the slit, or only in the rear part of the slit.

In a known manner, the slits have a non-radial development, so that starting from the bell they exit from the turbine according to a desired angled travel with respect to the radial direction.

According to one aspect of the present invention, the slits are disposed on a vertical median plane which is disposed tangent to an internal circumference, or at least one internal circumference, inside the bell and which has its axis, or center, coincident with the axis of rotation.

Again in a known manner, the slits start in a low part of the internal zone, for example bell-shaped, and exit in an upper part of the turbine.

In particular, it is provided that the slits are angularly distanced along the circumference of the bell and are provided with lateral walls, opposite each other and cooperating in pairs, to distance the work residues that are sucked in.

Each slit has a median axis located on the vertical median plane of the slit and oriented from the base of the bell upward.

Therefore, the cleaning turbine sucks in air from inside the tool and launches it far away, so that the chip does not obstruct the work in progress, no matter how small it is. Moreover, the action of the air cleans the work plane for a wide space.

According to one aspect of the present invention, at least one pair of the lateral walls of the slits are divergent, at least from the inside to the outside of the turbine.

A variant of the invention provides that the slits take at least part of the air from outside the turbine.

According to the invention, the slits have fundamental characteristics.

Another aspect of the present invention provides that the bell has a rounded edge, connected to the lateral wall of the bell and the slits, and correspondence with the base of the bell.

According to another solution, the turbine is also provided with a recess defined by a perimeter groove made on the lateral wall of the bell and cooperating with at least some of the slits.

The recess can in turn be connected with the rounded edge as described above.

In particular, the rounded edge causes an entrance flow of air that is accentuated by the circumferential recess so that the entering flow is coordinated with the action of the slits in cleaning the work plane.

A first characteristic is that both the lateral walls of the slit are smooth, unlike in the state of the art.

Another characteristic is that the slit widens in at least a lateral direction toward the outside of the turbine.

According to the invention, the slit widens laterally between 15% and 40%, advantageously around 28-33%.

According to a variant, the slit widens according to the vertical median plane from 30% to 50%, advantageously around 38-42%.

Another characteristic is that the median axis of the slit is inclined upward because of the external size of the turbine, the inclination being by an angle comprised between 30° and 55° with respect to the vertical axis.

Another characteristic is that the vertical median plane of the slit is inclined by an angle comprised between 45° and 75° with respect to the radial plane that affects the center line of the entrance of the slit.

Another characteristic of the invention is that, due to the development of the walls, the slit greatly accelerates the air, drastically displacing the chip no matter what size it is.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a section view of a cleaning turbine according to embodiments described here;
- fig. 2 is a sectioned view from above from II to II in fig. 1 of a cleaning turbine according to embodiments described here;
- fig. 3 is a perspective view of a cleaning turbine according to embodiments described here;
- fig. 4 is a perspective view from a different angle of the cleaning turbine in fig. 3;

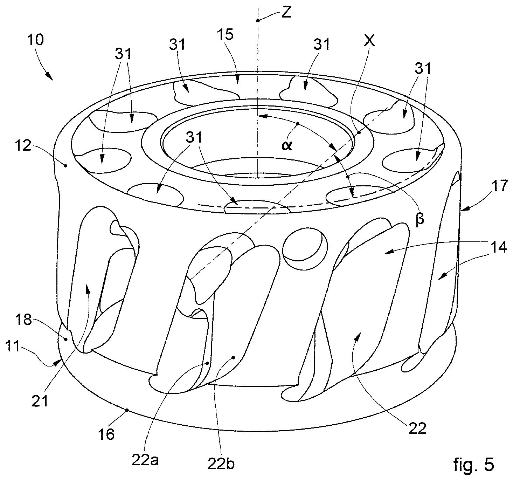

- fig. 5 is a view of a possible variant of fig. 3.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We shall now refer in detail to the various embodiments of the present invention, of which one or more examples are shown in the attached drawings. Each example is supplied by way of illustration of the invention and shall not be understood as a limitation thereof.

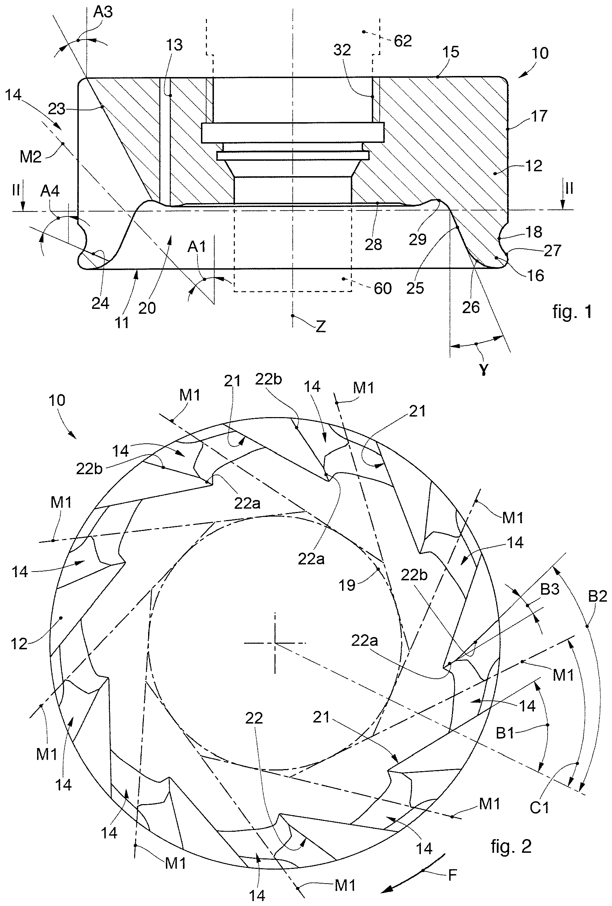

Embodiments described here using figs. 1-4 concern a cleaning turbine 10, of the type generally used in association with a tool 60 and driven by drive members 62, for example a mandrel that makes it rotate.

According to embodiments described using fig. 2 the cleaning turbine 10 is made to rotate clockwise in the direction indicated by arrow F in the drawing.

Obviously, if the tool rotates counter-clockwise, the turbine will have a specular conformation.

The cleaning turbine 10 has a substantially axial-symmetrical shape.

The cleaning turbine 10 is defined by a base 11 facing during use toward the zone being worked.

The cleaning turbine 10 is also provided with an upper surface 15, opposite the base 11, and with a lateral wall 17 located between the base 11 and the upper surface 15.

According to the solution shown in the attached drawings, the lateral wall 17 has a substantially cylindrical conformation.

The cleaning turbine 10 in this case comprises an internal bell 12 provided with a plurality of slits 14 disposed angularly distanced from each other along the circumference of the bell 12.

The particular bell 12 conformation of the cleaning turbine 10 is defined by a concavity 20 made in the base 11 of the cleaning turbine 10.

The concavity 20 of the bell 12 increases the delivery of air that can be sucked up through the base 11 and allows to generate, inside the latter, a desired depression that also affects the work zone disposed below.

The slits 14 are through from the concavity 20 to the lateral wall 17 of the cleaning turbine 10.

For example, for a cleaning turbine 10 with a diameter of about 98-100 mm, ten slits 14 are advantageously provided, for a cleaning turbine 10 with a diameter of about 78-80 mm, nine slits 14 are advantageously provided.

The air is sucked from inside the bell 12 and, through the slits 14, is made to exit toward the outside and upward.

According to a possible variant embodiment, the cleaning turbine 10 sucks in at least part of the air from outside the bell 12 by means of at least one possible hole, or through slits 13 that reach the upper part of the cleaning turbine 10.

According to some embodiments, on the plane orthogonal to the axis of the cleaning turbine 10, the slits 14 have a first entrance angle for the air and a second exit angle for the air. The entrance and exit angles are different from each other, in particular the exit angle is bigger than the entrance angle. In this way, the air exit section outside the bell 12 is bigger than the air entrance section from inside the bell 12.

According to the present invention, the slits 14 are defined by smooth internal lateral walls, to facilitate the passage of air and thus make the cleaning turbine 10 more efficient.

According to embodiments described using the section view in fig. 2, the slits 14 comprise a first pair of lateral walls, that is, two first lateral walls 21, 22 disposed substantially facing each other.

In the case shown, the first lateral walls 22 each comprise a first segment 22a and a second segment 22b, with a mainly flat development and disposed on planes angularly offset with respect to each other. In particular, the second segments 22b are disposed more external with respect to the first segments 22a, and move laterally with respect to the first segments 22a, so as to define a widening of the slit 14 from the inside toward the outside of the cleaning turbine 10.

The first segment 22a of each first lateral wall 22 can be disposed substantially parallel to the respective first lateral wall 21.

Furthermore, the second segment 22b can be inclined with respect to the first segment 22a both with respect to the radial direction and also with respect to the circumferential direction.

The reciprocal inclination of the first segment 22a and the second segment 22b allows to define a first lateral wall 22 with a substantially smooth conformation, that is, without sudden irregularities or steps that would compromise the functioning efficiency of the cleaning turbine 10.

The slit 14 can develop on a vertical median plane M1 which is inclined with respect to the radial plane passing through the center line of the slit 14 at entrance, by an angle C1 comprised, in some embodiments, between 45° and 75°, advantageously between 63° and 67°.

Moreover, according to some embodiments of the present invention, the vertical median plane M1 of each slit 14 is disposed tangent to an internal circumference 19 of the bell 12. The internal circumference 19 has its center or axis coinciding with the axis of rotation Z of the cleaning turbine 10.

The slit 14 also develops along a median axis M2 which, in some embodiments, can be inclined with respect to an axis of rotation Z of the cleaning turbine 10 by an angle A1 comprised between about 30° and about 55°, advantageously between 43° and 47°.

It is within the spirit of the invention to provide that the upstream side, that is, the lateral wall 21, is straight, while the downstream side, that is the lateral wall 22, has the two parts consecutive and contiguous, so that the slit 14 widens laterally from the inside to the outside of the cleaning turbine 10, in a single direction. According to this solution, the first lateral wall 21 is inclined with respect to the radial plane passing through the center line of the slit 14 by an angle of inclination B1. If the first lateral wall 21 and the first segment 22a of the lateral wall 22 are parallel to each other, then the latter is also inclined by said angle of inclination B1.

The second segment 22b of the lateral wall 22 is inclined with respect to the radial plane passing through the center line of the slit 14 by an angle of inclination B2.

According to some embodiments, the angle of inclination B1 with respect to the radial plane passing through the center line of the slit 14 can be comprised between about 45° and about 65°, advantageously between 53° and 57°.

According to some embodiments, the angle of inclination B2 can be comprised between about 70° and about 90°, advantageously between 77° and 82°.

The second segment 22b can diverge with respect to the first segment 22a by an angle B3. In some embodiments, the angle B3 can be comprised for example between about 8° and about 25°, advantageously between 12° and 18°.

According to some embodiments, the lateral wall 21 can be inclined with respect to the axis of rotation Z, that is, with respect to a radial plane passing through the axis of rotation Z, by an angle D1 comprised between about 15° and about 35°, advantageously between 23° and 26°.

According to possible embodiments of the present invention, the lateral wall 21 can be disposed substantially parallel to the vertical median plane M1, which is therefore inclined in a circumferential direction of said angle D1.

According to other embodiments of the present invention, the second segment 22b of the first lateral wall 22 is inclined with respect to a radial plane passing through the axis of rotation Z by an angle D2 comprised between about 17° and about 37°, preferably between 25° and 30°.

According to some embodiments, the slits 14 widen from the inside toward the outside of the cleaning turbine 10 in an upward direction.

According to embodiments described using fig. 1, the slit 14 comprises second lateral walls 23, 24 disposed opposite each other and configured to join and connect the first lateral walls 21, 22.

According to a possible solution of the present invention, the second lateral walls 23 and 24 can be substantially parallel and opposite each other.

According to a variant, the second lateral walls 23, 24 can be divergent with respect to each other toward the outside. This condition allows to increase the delivery of air in the turbine and hence to increase efficiency in sucking up the work residues.

According to embodiments described using fig. 1, with respect to the axis of rotation Z passing through the center of the turbine, the second lateral wall 23 can be inclined by an angle A3 comprised between about 20° and about 40°, advantageously between about 28° and 32°. According to some embodiments, the second lateral wall 24 can be inclined by an angle A4 comprised between about 55° and about 75°, advantageously between about 64° and 66°.

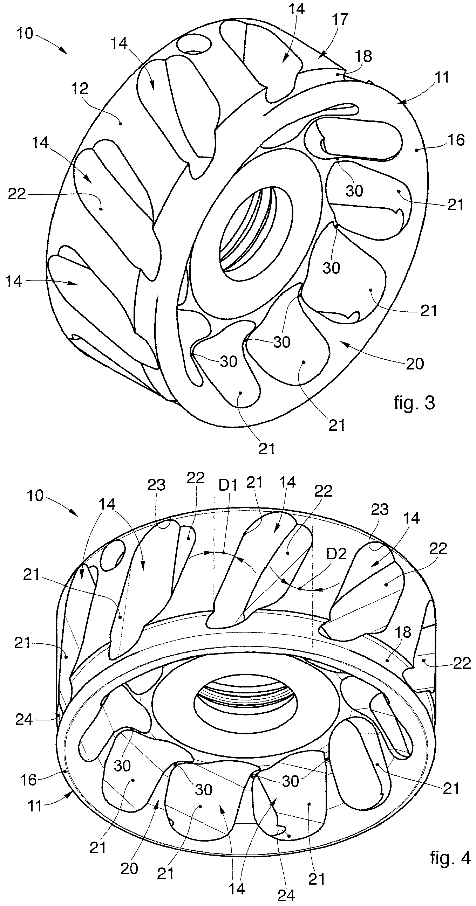

With reference to a cleaning turbine 10, for example with a diameter of 98-100 mm, the slits 14 can be for example angularly distanced along the circumference by 36°. In the example described for example with reference to figs. 3 and 4, the cleaning turbine 10 has ten slits 14 all having lateral walls 21, 22, 23, 24 that are smooth and connected to each other. In particular, the walls 21, 22 and the walls 23, 24 diverge at least partly from the inside to the outside of the cleaning turbine 10, respectively in a lateral and vertical direction.

The concavity 20 can have a substantially truncated cone conformation defined by a circumferential conical wall 25 that extends inclined with respect to the axis of rotation Z by an angle of opening γ comprised between 10° and 45°, preferably between 15° and 30°.

According to some embodiments, the bell 12 can have a rounded edge 16, connected to the lateral wall 17 of the bell 12 and to the slits 14.

The rounded conformation of the edge 16 allows to increase the efficiency of the cleaning turbine 10, increasing its capacity for generating an air depression.

The edge 16 connects the lateral wall 17 of the bell 12, the circumferential conical wall 25 and the slits 14.

The edge 16 can have a first rounded portion 26 that connects the circumferential conical wall 25 and the base 11, and a second rounded portion 27, continuous with the first rounded portion 26, which connects the base 11 and the lateral wall 17.

The first rounded portion 26 has a connection radius bigger than that of the second rounded portion 27: this allows to generate a rather extended depression cone in the work zone below.

Merely by way of example, the first rounded portion 26 has a connection radius comprised between 10mm and 20mm, while the second rounded portion 27 can have a connection radius comprised between 2mm and 10mm.

The edge 16 can cooperate with a circumferential recess 18 so that it has an ergonomic shape to make the cleaning turbine 10 practical and easy to grip, to connect it on each occasion to the respective tool 60.

The recess 18 can be defined by a perimeter groove which is made on the lateral wall 17 of the cleaning turbine 10 and cooperates with at least some of the slits 14.

The recess 18 can be positioned in correspondence with the second lateral walls 24 of the slits 14, at least partly affecting them.

Thanks to the recess 18, the finer work residues, that is, the dust, exiting from the slits 14 in correspondence with the second lateral walls 24, is sucked up by the depression effect generated by the cleaning turbine 10 to be further removed from the work zone through the slits 14 and then sucked in by possible suction devices.

This solution ensures an efficient cleaning of the work zone, also cleaning very fine particles such as dust.

According to a variant, the edge 16 can be linear, and end with an essentially peripheral part that is flat and not connected with either the lateral wall of the bell 12 or with the slits 14.

According to another aspect of the present invention, the concavity 20 is provided with a bottom wall 28, connected to the circumferential conical wall 25. Between the circumferential conical wall 25 and the bottom wall 28 a circular groove 29 is made, recessed in the thickness of the bell 12.

The circular groove 29 cooperates with the partly laminar flow that rises along the circumferential conical wall 25 and displaces it toward the tool 60. This action is accentuated if a circular recess is made on the bottom wall 28, in a more internal position with respect to the circular groove 29.

The circular groove 29 defines in each slit 14 an entrance edge 30 for the air that is particularly effective for conveying the air and work residues that are sucked up, thus optimizing the suction flows.

According to another embodiment of the present invention, the turbine can be provided with a plurality of channels 31, each of which is through between one of the slits 14 and the upper surface 15.

The channels 31 allow to increase the delivery of air that is sucked in through the bell 12.

According to a possible embodiment, the channels 31 are defined by circular holes, although it is not excluded that they may have different shapes.

The channels 31 each have a longitudinal axis X located inclined with respect to the axis of rotation Z. The inclination is intended to ensure that the work residues can flow away through the cleaning turbine 10, thus preventing them from clogging it up.

According to a possible solution, the channels 31 can be inclined with respect to the axis of rotation Z in a radial direction by a radial angle α which can be comprised between 20° and 60°, preferably between 25° and 45°.

According to another solution, also combinable with the previous one, the channels 31 can be inclined with respect to the axis of rotation Z in a circumferential direction by a circumferential angle β, which can be comprised between 20° and 60°, preferably between 30° and 50°.

According to a possible solution, each channel 31 intercepts the respective slit 14 in an intermediate position of the longitudinal extension of the latter.

In certain conditions of speed and type of material being worked, the channels 31 can be positioned more toward the center or toward the periphery of the slits 14.

This ensures that a high depression action is generated, preventing any stall conditions.

The cleaning turbine 10 according to the present invention is provided with a portion of a central hole 32 in which, during use, the work tool 60 is positioned coaxial.

The central hole 32 can be provided with connection elements, for example threaded portions, provided to allow the connection of the cleaning turbine 10 with a mandrel of the drive members 62, or with the work tool 60.

The threaded portions allow to give the cleaning turbine 10 the function of a clamping nut to clamp the tools 60 to the mandrel of the drive member 62. In this case, the cleaning turbine 10 can be screwed directly onto the mandrel and have a closing function, for example to close an elastic holding cone of the tool 60.

According to variants, the cleaning turbine 10 according to the present invention can be attached to a traditional tool-bearing device, for example with a conical coupling.

In this way a cleaning turbine 10 is obtained which can be adopted with any type of tool or tool-bearing device.

The cleaning turbine 10 according to the present invention functions as follows.

Once associated with the work tool 60, the cleaning turbine 10 is made to rotate around its axis of rotation Z by the drive members 62.

Thanks to the particular conformation of the slits 14, the rotation of the cleaning turbine 10 generates a depression which extends from the base 11 toward the work zone of the tool 60.

The larger chip is sucked in and made to pass through the slits 14 in a through manner while, once introduced through the slits 14, the dust at least partly exits through the lower part of the slits 14 where, due to the particular conformation of the recess 18 and the edge 16, it is sucked in again by the depression generated.

In this way the portion of dust, which has not received enough kinetic energy to be moved away from the work zone, is recirculated and subsequently distanced from the work zone.

In this way it is possible to ensure an optimal cleaning of the work zone where the work tool 60 is working.

It is clear that modifications and/or additions of parts may be made to the cleaning turbine as described heretofore, without departing from the field and scope of the present invention.

It is also clear that, although the present invention has been described with reference to some specific examples, a person of skill in the art shall certainly be able to achieve many other equivalent forms of cleaning turbine, having the characteristics as set forth in the claims and hence all coming within the field of protection defined thereby.

## Claims

1. Perfected cleaning turbine for work centers and suchlike, said turbine having an axis of rotation (Z), and being associable to a tool (60), said turbine being conformed as a bell (12) having a base (11) and a plurality of slits (14) each having a vertical median plane (M1) tangent to an internal circumference (19) of said bell (12) and having the axis coincident with the axis of rotation (Z), said slits (14) being angularly distanced along the circumference of said bell (12) and provided with pairs of lateral walls (21, 22, 23, 24), and each slit (14) having a median axis (M2) located on said vertical median plane (M1) and oriented from the base (11) upward, **characterized in that** at least a pair of said lateral walls (21, 22, 23, 24) of said slits (14) are divergent at least from the inside toward the outside of said turbine, **in that** it comprises an upper surface (15) opposite said base (11) and a lateral wall (17) located between said base (11) and said upper surface (15), **in that** said bell (12) comprises a concavity (20) made in said base (11), **and in that** said slits (14) are through from said concavity (20) to said lateral wall (17).

2. Cleaning turbine as in claim 1, **characterized in that** said lateral walls (21, 22, 23, 24) of said slits (14) are smooth.

3. Cleaning turbine as in claim 1 or 2, **characterized in that** said bell (12) has a rounded edge (16) connected to the lateral wall (17) of said bell (12) and to said slits (14).

4. Cleaning turbine as in any claim hereinbefore, **characterized in that** it is provided with a plurality of channels (31) each of which is through between one of said slits (14) and said upper surface (15).

5. Cleaning turbine as in claim 4, **characterized in that** said channels (31) each have a longitudinal axis (X) inclined with respect to said axis of rotation (Z).

6. Cleaning turbine as in any claim hereinbefore, **characterized in that** said concavity (20) has a truncated cone conformation defined by a circumferential conical wall (25) that extends inclined with respect to said axis of rotation (Z) by an angle of opening (γ) comprised between 10° and 45°, preferably between 15° and 30°.

7. Cleaning turbine as in claim 6, **characterized in that** said concavity (20) is provided with a bottom wall (28) connected to said circumferential conical wall (25), and between said circumferential conical wall (25) and said bottom wall (28) a circular groove (29) is made, recessed in the thickness of the bell (12).

8. Cleaning turbine as in any claim hereinbefore, **characterized in that** it comprises a recess (18) defined by a perimeter groove made on said lateral wall (17) and cooperating with at least some of said slits (14).

9. Cleaning turbine as in as in any claim hereinbefore, **characterized in that** said slits (14) widen at least in a lateral direction from the inside toward the outside of said turbine between 15% and 40%, advantageously around 28-33%.

10. Cleaning turbine as in any claim hereinbefore, **characterized in that** said slits (14) widen along the vertical median plane from the inside toward the outside of said turbine from 30% to 50%, advantageously around 38-42%.

11. Cleaning turbine as in any claim hereinbefore, **characterized in that** said slits (14) have said vertical median plane (M1) inclined with respect to the radial plane passing through the center line of the entrance slit (14) by an angle (C1) comprised between 45° and 75°, advantageously between 63° and 67°, and a median axis (M2) inclined vertically and upward with the exit, with respect to the axis (Z) of the turbine, by an angle (A1) comprised between about 30° and about 55°, advantageously between 43° and 47°.

12. Cleaning turbine as in any claim hereinbefore, **characterized in that** at least one lateral wall (21, 22) consists of two segments (22a, 22b) with a different angle, a second segment (22b) of said segments (22a, 22b) being displaced so as to widen the slit (14).

## Patentansprüche

1. Perfektionierte Reinigungsturbine für Arbeitszentren und dergleichen, wobei die besagte Turbine eine Rotationsachse (Z) hat und mit einem Werkzeug (60) assoziierbar ist, wobei die besagte Turbine als eine Glocke (12) geformt ist, die eine Basis (11) und eine Mehrzahl von Schlitzen (14) hat, von welchen jeder eine Vertikal-Medianebene (M1) tangential zu einem Innenumfang (19) der besagten Glocke (12) hat, und die Achse hat, welche mit der Rotationsachse (Z) zusammenfällt, wobei die besagten Schlitze (14) entlang des Umfangs der besagten Glocke (12) winkelmäßig im Abstand sind und mit Paaren von Lateralwänden (21, 22, 23,24) bereitgestellt sind, und wobei jeder Schlitz (14) eine Medianachse (M2) hat, welche auf der besagten Vertikal-Medianebene (M1) angeordnet ist und ausgehend von der Basis (11) aufwärtsorientiert ist,
**dadurch gekennzeichnet, dass** zumindest ein Paar der besagten Lateralwände (21, 22, 23, 24) der besagten Schlitze (14) zumindest ausgehend von der Innenseite in Richtung zur Außenseite der besagten Turbine divergent sind, **dass** sie eine obere Fläche (15) entgegengesetzt zur besagten Basis (11) und eine Lateralwand (17) aufweist, welche zwischen der besagten Basis (11) und der besagten oberen Fläche (15) angeordnet ist, **dass** die besagte Glocke (12) eine Konkavität (20) aufweist, welche in der besagten Basis (11) ausgeführt ist, **und dass** die besagten Schlitze (14) ausgehend von der besagten Konkavität (20) zur besagten Lateralwand (17) durchgängig sind.

2. Reinigungsturbine gemäß Anspruch 1, **dadurch gekennzeichnet, dass** die besagten Lateralwände (21, 22, 23, 24) der besagten Schlitze (14) glatt sind.

3. Reinigungsturbine gemäß Anspruch 1 oder 2, **dadurch gekennzeichnet, dass** die besagte Glocke (12) einen runden Rand (16) hat, welcher mit der Lateralwand (17) der besagten Glocke (12) und den besagten Schlitzen (14) verbunden ist.

4. Reinigungsturbine gemäß irgendeinem der vorhergehenden Ansprüche, **dadurch gekennzeichnet, dass** sie mit einer Mehrzahl von Kanälen (31) bereitgestellt ist, von welchen jeder zwischen einem der besagten Schlitze (14) und der besagten oberen Fläche (15) durchgängig ist.

5. Reinigungsturbine gemäß Anspruch 4, **dadurch gekennzeichnet, dass** jeder der besagten Kanäle (31) eine Longitudinalachse (X) hat, welche mit Bezug auf die besagte Rotationsachse (Z) geneigt ist.

6. Reinigungsturbine gemäß irgendeinem der vorhergehenden Ansprüche, **dadurch gekennzeichnet, dass** die besagte Konkavität (20) eine Kegelstumpfgestalt hat, welche durch eine konische Umfangswand (25) definiert ist, die sich mit Bezug auf die besagte Rotationsachse (Z) mit einem Öffnungswinkel (γ) geneigt erstreckt, der zwischen 10° und 45° liegt, bevorzugt zwischen 15° und 30°.

7. Reinigungsturbine gemäß Anspruch 6, **dadurch gekennzeichnet, dass** die besagte Konkavität (20) mit einer Bodenwand (28) bereitgestellt ist, die mit der besagten konischen Umfangswand (25) verbunden ist, und zwischen der besagten konischen Umfangswand (25) und der besagten Bodenwand (28) eine Ringnut (29) ausgeführt ist, welche in der Dicke der Glocke (12) ausgespart ist.

8. Reinigungsturbine gemäß irgendeinem der vorhergehenden Ansprüche, **dadurch gekennzeichnet, dass** sie eine Aussparung (18) aufweist, welche durch eine Umfangsnut definiert ist, die an der besagten Lateralwand (17) ausgeführt ist und mit zumindest einigen der besagten Schlitze (14) kooperiert.

9. Reinigungsturbine gemäß irgendeinem der vorhergehenden Ansprüche, **dadurch gekennzeichnet, dass** sich die besagten Schlitze (14) ausgehend von der Innenseite in Richtung zur Außenseite der besagten Turbine zumindest in einer Lateralrichtung zwischen 15 % und 40 % weiten, vorteilhaft in etwa 28-33 %.

10. Reinigungsturbine gemäß irgendeinem der vorhergehenden Ansprüche, **dadurch gekennzeichnet, dass** sich die besagten Schlitze (14) ausgehend von der Innenseite zur Außenseite der besagten Turbine entlang der Vertikal-Medianebene 30 % bis 50 % weiten, vorteilhaft in etwa 38-42 %.

11. Reinigungsturbine gemäß irgendeinem der vorhergehenden Ansprüche, **dadurch gekennzeichnet, dass** die besagten Schlitze (14) die besagte Vertikal-Medianebene (M1), welche mit Bezug auf die Radialebene, die durch die Mittellinie des Schlitzeingangs (14) hindurchtritt, mit einem Winkel (C1) geneigt ist, welcher zwischen 45° und 75° liegt, vorteilhaft zwischen 63° und 67°, und eine Medianachse (M2) haben, welche mit Bezug auf die Achse (Z) der Turbine beim Ausgang vertikal und aufwärts mit einem Winkel (A1) geneigt ist, welcher zwischen in etwa 30° und in etwa 55° liegt, vorteilhaft zwischen 43° und 47°.

12. Reinigungsturbine gemäß irgendeinem der vorhergehenden Ansprüche, **dadurch gekennzeichnet, dass** zumindest eine Lateralwand (21, 22) aus zwei Segmenten (22a, 22b) mit einem unterschiedlichen Winkel besteht, wobei ein zweites Segment (22b) der besagten Segmente (22a, 22b) versetzt ist, um den Schlitz (14) zu weiten.

## Revendications

1. Turbine de nettoyage perfectionnée pour centres de travail et analogues, ladite turbine ayant un axe de rotation (Z) et pouvant être associée à un outil (60), ladite turbine étant conçue sous la forme d'une cloche (12) ayant une base (11) et une pluralité de des fentes (14) ayant chacune un plan médian vertical (M1) tangent à une circonférence interne (19) de ladite cloche (12) et ayant l'axe coïncidant avec l'axe de rotation (Z), lesdites fentes (14) étant espacées angulairement le long de la circonférence de ladite cloche (12) et munies de paires de parois latérales (21, 22, 23, 24), et chaque fente (14) ayant un axe médian (M2) situé sur ledit plan médian vertical (M1) et orienté à partir de la base (11) vers le haut, **caractérisée en ce qu'**au moins une paire desdites parois latérales (21, 22, 23, 24) desdites fentes (14) divergent au moins de l'intérieur vers l'extérieur de ladite turbine, **en ce qu'**elle comprend une surface supérieure (15) opposée à ladite base (11) et une paroi latérale (17) située entre ladite base (11) et ladite surface supérieure (15), **en ce que** ladite cloche (12) comprend une concavité (20) réalisée dans ladite base (11), et **en ce que** lesdites fentes (14) sont traversantes de ladite concavité (20) à ladite paroi latérale (17).

2. Turbine de nettoyage selon la revendication 1, **caractérisée en ce que** lesdites parois latérales (21, 22, 23, 24) desdites fentes (14) sont lisses.

3. Turbine de nettoyage selon la revendication 1 ou 2, **caractérisée en ce que** ladite cloche (12) présente un bord arrondi (16) relié à la paroi latérale (17) de ladite cloche (12) et auxdites fentes (14).

4. Turbine de nettoyage selon l'une quelconque des revendications précédentes, **caractérisée en ce qu'**elle est munie d'une pluralité de canaux (31) dont chacun est traversant entre l'une desdites fentes (14) et ladite surface supérieure (15).

5. Turbine de nettoyage selon la revendication 4, **caractérisée en ce que** lesdits canaux (31) ont chacun un axe longitudinal (X) incliné par rapport audit axe de rotation (Z).

6. Turbine de nettoyage selon l'une quelconque des revendications précédentes, **caractérisée en ce que** ladite concavité (20) présente une conformation en cône tronqué définie par une paroi conique circonférentielle (25) qui s'étend inclinée par rapport audit axe de rotation (Z) sur un angle d'ouverture (γ) compris entre 10° et 45°, de préférence entre 15° et 30°.

7. Turbine de nettoyage selon la revendication 6, **caractérisée en ce que** ladite concavité (20) est munie d'une paroi inférieure (28) reliée à ladite paroi conique circonférentielle (25), et entre ladite paroi conique circonférentielle (25) et ladite paroi inférieure (28) est réalisée une gorge circulaire (29), évidée dans l'épaisseur de la cloche (12).

8. Turbine de nettoyage selon l'une quelconque des revendications précédentes, **caractérisée en ce qu'**elle comprend un évidement (18) défini par une gorge périmétrique réalisée sur ladite paroi latérale (17) et coopérant avec au moins certaines desdites fentes (14).

9. Turbine de nettoyage selon l'une quelconque des revendications précédentes, **caractérisée en ce que** lesdites fentes (14) s'élargissent au moins dans une direction latérale de l'intérieur vers l'extérieur de ladite turbine de 15 % à 40 %, avantageusement d'environ 28 à 33 %.

10. Turbine de nettoyage selon l'une quelconque des revendications précédentes, **caractérisée en ce que** lesdites fentes (14) s'élargissent le long du plan médian vertical de l'intérieur vers l'extérieur de la turbine de 30 % à 50 %, avantageusement d'environ 38 à 42 %.

11. Turbine de nettoyage selon l'une quelconque des revendications précédentes, **caractérisée en ce que** lesdites fentes (14) ont ledit plan médian vertical (M1) incliné par rapport au plan radial passant par l'axe de la fente d'entrée (14) sur un angle (Cl) compris entre 45° et 75°, avantageusement entre 63° et 67°, et un axe médian (M2) incliné verticalement et vers le haut avec la sortie, par rapport à l'axe (Z) de la turbine, sur un angle (Al) compris entre environ 30° et environ 55°, avantageusement entre 43° et 47°.

12. Turbine de nettoyage selon l'une quelconque des revendications précédentes, **caractérisée en ce qu'**au moins une paroi latérale (21, 22) est constituée de deux segments (22a, 22b) ayant un angle différent, un second segment (22b) desdits segments (22a, 22b) étant déplacé de manière à élargir la fente (14).
